# EUROPÄISCHE PATENTSCHRIFT

(11) **EP 2 586 634 B1**
(45) Veröffentlichungstag und Bekanntmachung des Hinweises auf die Patenterteilung: **17.06.2015**
(21) Anmeldenummer: 12189751.6
(22) Anmeldetag: 24.10.2012
(51) Int. Cl.: B60D 1/02, B60D 1/62

(54) **Fernanzeige für Anhängekupplung**
Remote display for trailer coupling
Indication à distance pour attelage

(30) Priorität: 27.10.2011 DE 102011085338
(43) Veröffentlichungstag der Anmeldung: 01.05.2013
(73) Patentinhaber: Rockinger Agriculture GmbH, 99880 Waltershausen (DE)
(72) Erfinder: Schack, Jörg, 99869 Hochheim (DE); Schäfer, Wolfgang, 81827 München (DE)
(74) Vertreter: RLTG

(56) Entgegenhaltungen:
- EP-A1- 0 823 343
- EP-A2- 0 388 848
- DE-A1-102004 052 618
- US-A1- 2006 186 636

## Beschreibung

Die vorliegende Erfindung betrifft eine Anhängekupplung zur mechanischen Kopplung eines Zugfahrzeugs mit einem Nachlaufteil, wie etwa einem Nachlauffahrzeug oder einem Nachlaufgerät. Ein Nachlauffahrzeug im Sinne der vorliegenden Anmeldung kann jedes durch Räder oder Kufen bodengebundene, durch ein Zugfahrzeug passiv bewegbare Fahrzeug sein. Ein Nachlaufgerät im Sinne der vorliegenden Anmeldung kann jedes durch ein Zugfahzeug passiv bewegbare Funktionsgerät sein, wie etwa landwirtschaftliche Funktionsgeräte, insbesondere Pflug, Egge und dergleichen, oder wie etwa auch eine Nachlauf-Planierwalze und dergleichen.

Eine gattungsgemäße Anhängekupplung weist ein Kupplungsglied auf, welches verstellbar ist zwischen einer Freigabestellung und einer Kupplungsstellung, wobei das Kupplungsglied dazu ausgebildet ist, in der Kupplungsstellung ein gesondert vom Kupplungsglied ausgebildetes Gegenkupplungsglied form- oder/und kraftschlüssig in Eingriff zu halten, und wobei das Kupplungsglied weiter dazu ausgebildet ist, in der Freigabestellung das Gegenkupplungsglied zur Trennung vom Kupplungsglied freizugeben.

Weiter weist die Kupplung wenigstens einen zu überwachenden Bolzen auf, welcher zwischen einer vorbestimmten zu überwachenden Stellung und einer davon verschiedenen weiteren Stellung verlagerbar ist. Dies kann beispielsweise ein zur mechanischen Sicherung des Kupplungsglieds wenigstens in der Kupplungsstellung gegen eine Verlagerung aus der Kupplungsstellung heraus vorgesehener Sicherungsbolzen sein, welcher zu der erwähnten Sicherung des Kupplungsglieds wenigstens in der Kupplungsstellung verlagerbar ist zwischen einer Vorbereitungsstellung, in welcher sich der Sicherungsbolzen dann befindet, wenn sich das Kupplungsglied in einer von der Kupplungsstellung verschiedenen Stellung befindet, und einer Sicherungsstellung, in welcher sich der Sicherungsbolzen zur oben genannten mechanischen Sicherung des Kupplungsglieds in dessen Kupplungsstellung befindet. Die Vorbereitungsstellung kann eine beliebige, auch nur vorübergehende Stellung sein, welche sich von der Sicherungsstellung unterscheidet. Da sich der Sicherungsbolzen nur dann in der Sicherungsstellung befindet, wenn das Kupplungsglied sich in der Kupplungsstellung befindet, kann der Vorbereitungsstellung eine beliebige von der Kupplungsstellung verschiedene Stellung des Kupplungsglieds zugeordnet sein. Da sich das Kupplungsglied im Betrieb der Anhängekupplung dauerhaft außer in der Kupplungsstellung hauptsächlich nur noch in der Freigabestellung befindet, ist bevorzugt die Vorbereitungsstellung des Sicherungsbolzens der Freigabestellung des Kupplungsbolzens zugeordnet.

Die Druckschrift US 2006/0186636 A1 offenbart eine gattungsgemäße Anhängekupplung in Form einer Aufliegerkupplung für einen Sattelschlepper, bei welcher die korrekte Lage eines Königszapfens des Aufliegers berührungslos durch einen induktiven Näherungssensor erfasst wird, beispielweise durch einen nach dem Hall-Effekt arbeitenden Sensor. Der bekannte berührungslose Sensor ist dabei derart am Zugfahrzeug vorgesehen, dass der Königszapfen als der zu überwachende Bolzen nur bei korrekter Ankupplung neben dem Sensor angeordnet ist und sich in dessen Magnetfeld befindet. Somit ist zumindest ein Abschnitt der Bewegungstrajektorie des Königszapfens in dem vom Näherungssensor ausgehenden Magnetfeld gelegen. Allerdings ist aufgrund der Relativkinematik von Aufliegerkupplungen bei deren Kuppelvorgang eine den Königszapfen umgebende Anordnung des Näherungssensors unmöglich, da der Königszapfen beim Ankuppeln orthogonal zu seiner Zapfenlängsachse in die zugfahrzeugseitige Kupplung eingeführt werden muss.

Zur Erfassung, ob sich ein zu überwachender Bolzen - bevorzugt etwa der genannte Sicherungsbolzen, aber zusätzlich oder alternativ auch ein beliebiger anderer in der Kupplung vorhandener Bolzen - in einer vorbestimmten zu überwachenden Stellung befindet oder nicht, weist die gattungsgemäße Anhängekupplung weiter einen Sensor auf, welcher die genannte Erfassung mittels eines magnetischen oder/und eines elektrischen Feldes leistet.

Derartige Anhängekupplungen sind an Kraftwagen, insbesondere Lastkraftwagen und landwirtschaftlichen Fahrzeugen, insbesondere - aber nicht nur - in Form von Bolzenkupplungen, in Gebrauch und allgemein bekannt. Dabei werden als Sensoren beispielsweise induktive oder/und kapazitive Näherungsschalter an vorbestimmten Stellen der vorbekannten Anhängekupplung eingesetzt, um zu erfassen, dass sich ein Bolzen der Anhängekupplung in einer gewünschten Stellung befindet. Auf diese Weise kann in besonders zuverlässiger Weise ermittelt werden, ob beispielsweise ein Nachlauffahrzeug ordnungsgemäß mit dem Zugfahrzeug gekuppelt ist oder ob zumindest der Kupplungsbolzen als das Kupplungsglied sich ordnungsgemäß gesichert in der Kupplungsstellung befindet.

Nachteilig an der bekannten Anhängekupplung ist zum einen der für den Sensor üblicherweise benötigte hohe Bauraumbedarf, da dieser in der Regel an der zu überwachenden Stellung dem zu überwachenden Bolzen benachbart angeordnet werden muss. Gerade im landwirtschaftlichen Einsatz mit den dort herrschenden starken mechanischen Belastungen und der üblicherweise großen Verschmutzungsgefahr im Betrieb wirkt die Bauraumforderung herkömmlicher Sensoren an der gattungsgemäßen Anhängekupplung potentiell standzeitmindernd, da Anbauteile an einer Anhängekupplung um so wahrscheinlicher von äußeren Einflüssen, wie unkontrolliert bewegten und umherfliegenden Masseteilen und Schmutz, beeinträchtigt werden, je größer sie sind.

Weiter verbrauchen die Sensoren herkömmlicher Anhängekupplungen verhältnismäßig viel Energie, so dass sie in der Regel über körperliche Leitungen mit einer Energieversorgung an dem die Anhängekupplung tragenden Fahrzeug verbunden sind. Dies gilt insbesondere dann, wenn vom Sensorsignal abhängige Information an eine von der Anhängekupplung entfernte Stelle des die Anhängekupplung tragenden Fahrzeugs übertragen werden soll, etwa in das Führerhaus des die Anhängekupplung tragenden Fahrzeugs.

Insbesondere bei landwirtschaftlichen Fahrzeugen ist die Kabelanbindung von Sensoren der bekannten Anhängekupplung an das die Anhängekupplung tragende Fahrzeug nachteilig, da Anhängekupplungen an landwirtschaftlichen Fahrzeugen häufig höhenverstellbar vorgesehen sind und die Kabelverbindungen entweder die Höhenverstellung der Anhängekupplung im Fahrzeug stören oder durch diese beschädigungsgefährdet sind.

Es ist daher Aufgabe der vorliegenden Erfindung, eine Anhängekupplung der eingangs genannten Art derart weiterzubilden, dass die oben genannten Nachteile gemindert oder sogar beseitigt werden können.

Diese Aufgabe wird durch die vorliegende Erfindung durch eine gattungsgemäße Anhängekupplung gelöst, bei welcher der Sensor ein magnetisches oder/und elektrisches Feld erzeugendes Feldbauteil aufweist, welches derart angeordnet ist, dass es eine Trajektorie des zu überwachenden Bolzens umgibt, welche dieser bei seiner Bewegung in die zu überwachende Stellung oder/und aus der zu überwachenden Stellung durchläuft.

Zur Erzeugung des magnetischen oder/und elektrischen Feldes, welches der Sensor zur Erfassung nutzt, ob sich der zu überwachende Bolzen in der zu überwachenden Stellung befindet oder nicht, weist der Sensor also erfindungsgemäß ein ein magnetisches oder/und elektrisches Feld erzeugendes Feldbauteil auf.

Da mit dem Sensor und insbesondere mit dem Feldbauteil gerade das Vorhandensein des zu überwachenden Bolzens in der zu überwachenden Stellung erfasst werden soll, und der Bolzen lediglich durch eine kontinuierliche Bewegung zwischen der zu überwachenden Stelle und einer von dieser abweichenden Stellung bewegt werden kann, existiert stets eine Trajektorie, welche den von dem zu überwachenden Bolzen bei seiner Bewegung in die zu überwachende Stellung oder/und aus dieser heraus durchlaufenen Weg angibt.

Dabei kann der Sensor besonders Bauraum sparend ausgeführt werden, wenn das oben genannte Feldbauteil derart angeordnet ist, dass es die Trajektorie des zu überwachenden Bolzens umgibt. Durch die die Trajektorie umgebende Bauweise des Feldbauteils kann mit geringem Energieverbrauch ein ausreichend starkes Feld aufgebaut werden, um zu ermitteln, ob der zu überwachende Bolzen sich in seiner zu überwachenden Stellung befindet oder nicht.

Die Trajektorie kann eine Einhüllende des in die zu überwachende Stellung oder/und aus dieser heraus bewegten Bolzens sein oder kann ein geometrischer Ort eines vorbestimmten Punktes, etwa eines Mittelpunktes oder einer Mittelachse eines Bolzenabschnitts bei der Bewegung des Bolzens in die zu überwachende Stellung oder/und aus dieser heraus sein.

Gemäß einer ersten, bevorzugten konstruktiven Alternative kann die Anhängekupplung als an sich bekannte Bolzenkupplung einen Kupplungsbolzen als das Kupplungsglied und weiter einen Zugösen-Aufnahmeraum zur Aufnahme einer Zugöse als dem Gegenkupplungsglied darin aufweisen. In der Kupplungsstellung ragt der Kupplungsbolzen weiter in den Zugösen-Aufnahmeraum ein als in der Freigabestellung. Vorzugsweise durchsetzt der Kupplungsbolzen in der Kupplungsstellung den Zugösen-Aufnahmeraum, um eine im Zugösen-Aufnahmeraum angeordnete Zugöse durchsetzend möglichst sicher formschlüssig mit der Anhängekupplung zu kuppeln.

Als zweite konstruktive Alternative kann die Anhängekupplung als an sich bekannte Kugelkupplung eine Kupplungskugel als das Kupplungsglied umfasst, welche zur Aufnahme einer Kupplungspfanne als dem Gegenkupplungsglied ausgebildet ist, wobei die Kupplungskugel vorzugsweise zwischen Kupplungsstellung und Freigabestellung schwenkbar ist. Der Sicherungsbolzen kann dann in der Sicherungsstellung an einem die Kupplungskugel tragenden Kupplungsträger angreifen.

Weiter soll nicht ausgeschlossen sein, dass die Anhängekupplung als an sich bekannte Sattelkupplung ausgebildet ist, wie sie an Sattelschleppern zum Einsatz kommt, wenngleich dies nicht bevorzugt ist.

Das Feldbauteil kann derart an der Anhängekupplung angeordnet sein, dass der zu überwachende Bolzen wenigstens während eines Zeitabschnitts seiner Bewegung in die zu überwachende Stellung längs der Trajektorie in das Feldbauteil einragt oder das Feldbauteil sogar durchsetzt. In der Regel ist die Trajektorie länger als die Abmessung des Feldbauteils in Längsrichtung der Trajektorie, so dass es durch die Anordnung des Feldbauteils lediglich zu einer geringfügigen radialen Bauraumforderung um den zu überwachenden Bolzen herum kommt. In Längsrichtung der Trajektorie ist der Bauraum für die Bewegung des überwachenden Bolzens ohnehin bereitzustellen. Dann jedenfalls, wenn der zu überwachende Bolzen wenigstens während des genannten Zeitabschnitts in das Feldbauteil einragt, kann es zu einer Wechselwirkung zwischen dem Feldbauteil und dem zu überwachenden Bolzen kommen, was ein Sensorsignal ermöglicht, das Rückschlüsse auf das Vorhandensein des zu überwachenden Bolzens in der zu überwachenden Stellung erlaubt.

Gemäß einer ersten Ausführungsform der vorliegenden Erfindung kann das Feldbauteil zur Erzeugung eines magnetischen Feldes ausgebildet sein. Beispielsweise kann das Feldbauteil eine aus elektrisch leitendem Material gebildete Spule umfassen, welche durch Bestromung in ihrem von der Spule umgebenen Innenraum in an sich bekannter Weise ein elektromagnetisches Feld erzeugt. Im Falle der Ausbildung des Feldbauteils als Induktiv-Feldbauteil zur Erzeugung eines magnetischen Feldes ist es vorteilhaft, wenn der zu überwachende Bolzen wenigstens in einem Erfassungsabschnitt desselben ein ferromagnetisches Material umfasst. In diesem Fall kann der zeitabschnittsweise in das Feldbauteil einragende oder es durchsetzende Bolzen, bzw. genauer der Erfassungsabschnitt mit dem ferromagnetischen Material, einen Magnetkern des Feldbauteils bilden. Abhängig von der Stellung des zu überwachenden Bolzens und damit des Erfassungsabschnitts ragt der als ferromagnetischer Magnetkern wirkende Erfassungsabschnitt unterschiedlich tief in die Spule ein, was bei einer Änderung des Bestromungszustands des Feldbauteils bei unterschiedlichen Einragtiefen zu unterschiedlichen Autoinduktionszuständen führt, welche als elektrisches Signal und damit als Antwort des Feldbauteils auf die Einragesituation des Erfassungsabschnitts ermittelbar sind. Vorzugsweise umschließt die Spule die Trajektorie vollständig. Dann kann der Sensor mit besonders geringem Bauraumbedarf bereitgestellt werden, wenn die Trajektorie und eine Spulenlängsachse abschnittsweise zusammenfallen oder in Tangentenbeziehung zueinander stehen.

Alternativ oder zusätzlich kann das Feldbauteil als Kapazitiv-Feldbauteil zur Erzeugung eines elektrischen Feldes ausgebildet sein. Beispielsweise kann das Feldbauteil eine aus elektrisch leitendem Material gebildete Elektrode umfassen, welche die Trajektorie umgibt. Vorzugsweise umschließt die so gebildete Elektrode die Trajektorie vollständig.

Im Falle der Ausbildung des Feldbauteils zur Erzeugung eines elektrischen Feldes ist es vorteilhaft, wenn der zu überwachende Bolzen wenigstens in einem Erfassungabschnitt ein elektrisch leitendes Material aufweist, welches sich auf einem vorbestimmten Spannungspotential befindet, das von einem Betriebspotential des Feldbauteils abweicht. Dieses vorbestimmte Spannungspotential ist in besonders einfachen und daher bevorzugten Fällen das Massepotential eines die Anhängekupplung tragenden Fahrzeugs oder das Erdpotential.

In dieser zweiten, kapazitiv wirkenden Ausführungsform wirken das Feldbauteil und der Erfassungsabschnitt des zu überwachenden Bolzens wie Elektroden eines Kondensators. Durch Relativbewegung des zu überwachenden Bolzens und damit seines Erfassungsabschnitts relativ zum Feldbauteil ändert sich das zwischen Feldbauteil und Erfassungsabschnitt gebildete elektrische Feld, was wiederum als elektrisches Signal und damit als Information darüber ermittelbar ist, ob sich der zu überwachende Bolzen in der zu überwachenden Stellung befindet oder nicht.

Eine Auswerteeinheit kann dann beispielsweise durch Vergleich des aktuellen Sensorsignals mit einem der zu überwachenden Stellung des zu überwachenden Bolzens zugeordneten Bezugssignal ermitteln, ob sich der zu überwachende Bolzen in der zu überwachenden Stellung befindet oder nicht.

Dabei ist es unter Umständen nicht nur möglich, zu erfassen, ob der zu überwachende Bolzen in seiner zu überwachenden Stellung ist oder nicht, sondern es könnte grundsätzlich auch daran gedacht sein, eine von der zu überwachenden Stellung abweichende Stellung zu erfassen. Dies kann beispielsweise dadurch ermöglicht werden, dass der Erfassungsabschnitt während der Bewegung des zu überwachenden Bolzens in dessen zu überwachende Stellung abhängig von der jeweiligen Momentanstellung unterschiedlich weit in das Feldbauteil einragt. Dann, wenn der Erfassungsabschnitt in der zu überwachenden Stellung nicht in das Feldbauteil einragt, bei Verlassen oder bis zum Erreichen der zu überwachenden Stellung jedoch in das Feldbauteil einragt oder dieses sogar durchsetzt, ist aufgrund der bei unterschiedlichen Einragtiefen erhältlichen unterschiedlichen Erfassungssignale eine einfache Möglichkeit realisierbar, wenigstens die Anordnung des zu überwachenden Bolzens in dessen zu überwachender Stellung zu erfassen.

Der zu überwachende Bolzen kann überdies zusätzlich zu seinem Erfassungsabschnitt einen Nicht-Erfassungsabschnitt aufweisen, welcher mit dem Feldbauteil nicht oder verglichen mit dem Erfassungsabschnitt in unterschiedlicher Weise, in der Regel in erheblich geringerem Umfang, wechselwirkt. Der Erfassungsabschnitt ist vorzugsweise in Trajektorienverlaufsrichtung dem Erfassungsabschnitt benachbart. In diesem Falle kann beispielsweise daran gedacht sein, dass der Nicht-Erfassungsabschnitt dann in das Feldbauteil einragt oder dieses durchsetzt, wenn sich der zu überwachende Bolzen in der zu überwachenden Stellung befindet. Dabei ist besonders bevorzugt die Grenze zwischen Erfassungsabschnitt und Nicht-Erfassungsabschnitt dann, wenn sich der zu überwachende Bolzen in der zu überwachenden Stellung befindet, an einem Rand des vom Feldbauteil umgebenen Trajektorienabschnitts angeordnet, so dass unmittelbar nach Verlassen oder unmittelbar vor Erreichen der zu überwachenden Stellung der Erfassungsabschnitt schon bzw. noch in das Feldbauteil einragt. In diesem Falle ist es besonders vorteilhaft möglich, den zu überwachenden Bolzen zusätzlich zu seiner Erfassung mit dem Sensor für eine taktile Erfassung der Bolzenstellung zu verwenden.

Vorzugsweise ist, wie oben dargelegt, zur Bereitstellung eines möglichst deutlichen und damit fehlersicheren Erfassungssignals dann, wenn sich der zu überwachende Bolzen der überwachenden Stellung befindet, der Nicht-Erfassungsabschnitt vom Feldbauteil umgeben. Besonders bevorzugt ist dabei, dass nur der Nicht-Erfassungsabschnitt in der genannten Situation vom Feldbauteil umgeben ist. Dennoch soll es im Rahmen der vorliegenden Erfidnung auch nicht ausgeschlossen sein, dass auch ein Teil des Erfassungsabschnitts vom Feldbauteil umgeben ist, wenn sich der zu überwachende Bolzen in der zu überwachenden Stellung befindet. Es ist sogar grundsätzlich denkbar, wenngleich nicht bevorzugt, dass dann, wenn sich der zu überwachende Bolzen in der zu überwachenden Stellung befindet, nur der Erfassungsabschnitt vom Feldbauteil umgeben ist, und ein Trennbereich, in welchem der Erfassungsabschnitt an den Nicht-Erfassungsabschnitt angrenzt, derart an einem Rand des von dem Feldbauteil umgebenen Trajektorienabschnitts liegt, dass sich der Erfassungsabschnitt dann, wenn der zu überwachende Bolzen die zu überwachende Stellung verlässt oder sich noch nicht in dieser befindet, sich aus dem Feldbauteil hinaus bewegt bzw. noch nicht vollständig von diesem umgeben ist und sich der Nicht-Erfassungsabschnitt in das Feldbauteil hinein bewegt bzw. sich aus diesem vollständig hinaus bewegt.

Zur Nachrüstung oder zum Ersatz im Schadensfall kann vorgesehen sein, dass das Feldbauteil in einem lösbar an einem Anhängekupplungsgehäuse angeordneten oder anordenbaren Sensorgehäuse aufgenommen ist.

Zur Übertragung von Sensorsignalen kann in dem Sensorgehäuse eine Drahtlos-Übertragungseinrichtung aufgenommen sein. Hierdurch entfallen vorteilhafterweise die ansonsten notwendigen Signalübertragungsleitungen. Wenngleich die Drahtlos-Übertragungseinrichtung grundsätzlich eine optische Übertragungseinrichtung sein kann, etwa eine Infrarot-Übertragungseinrichtung, ist dies aufgrund der an einer Anhängekupplung häufig auftretenden Verschmutzung nicht bevorzugt. Aus diesem Grunde ist die Drahtlos-Übertragungseinrichtung besonders bevorzugt eine Funkübertragungseinrichtung, möglicherweise eine Bluetooth-Übertragungseinrichtung oder eine beliebige andere Funkübertragungseinrichtung.

Zur Energieversorgung des Sensors oder/und der Drahtlos-Übertragungseinrichtung kann in dem Sensorgehäuse eine Energiespeichereinrichtung aufgenommen sein.

Dadurch, dass das die Trajektorie umgebende Feldbauteil, verglichen mit herkömmlichen Näherungsschaltern, eine sehr große Feld erzeugende Fläche aufweist, reicht zur Erzielung eines nutzbaren Sensorsignals eine sehr geringe Energiemenge aus. In diesem Falle kann die Energiespeichereinrichtung unlösbar in dem Sensorgehäuse aufgenommen sein und kann das Sensorgehäuse nach Entleerung der Energiespeichereinrichtung ausgetauscht werden. Dies ermöglicht, das Feldbauteil, oder/und die Drahtlos-Übertragungseinrichtung oder/und die Energiespeichereinrichtung in das Sensorgehäuse einzugießen und somit hermetisch von äußeren Einflüssen abzuschirmen, was zu einer besonders robusten Unterbringung der genannten Bauteile im Sensorgehäuse führt.

Dennoch soll, wenngleich nicht bevorzugt, auch eine austauschbare Anordnung einer Energiespeichereinrichtung im Sensorgehäuse von der vorliegenden Weiterbildung nicht ausgeschlossen sein.

Damit das Gehäuse einerseits besonders wenig Bauraum fordernd ausgestaltet werden kann und andererseits der zu überwachende Bolzen ausreichend Bewegungsraum erhält, kann das Sensorgehäuse eine es durchsetzende Öffnung aufweisen, in welche hinein, insbesondere durch welche hindurch, im fertig montierten Zustand die Trajektorie des zu überwachenden Bolzens verläuft. Durch die durchsetzende Öffnung im Sensorgehäuse kann der zu überwachende Bolzen zugänglich sein, so dass seine Position zusätzlich oder alternativ auch taktil per Hand erfüllt werden kann. Im Falle des Vorsehens der Öffnung im Sensorgehäuse ist es vorteilhaft, wenn das Feldbauteil die Öffnung umgibt, da dann sichergestellt sein kann, dass das Feldbauteil bei effektivem Schutz durch das Sensorgehäuse die Trajektorie des zu überwachenden Bolzens tatsächlich umgibt.

Grundsätzlich kann der zu überwachende Bolzen ein beliebiger Bolzen der Anhängekupplung sein. Von besonderer Wichtigkeit für die Betriebssicherheit der Anhängekupplung ist jedoch der Sicherungsbolzen und dessen Sicherungsstellung, da Anhängekupplungen der eingangs genannten Art üblicherweise derart konstruiert sind, dass der Sicherungsbolzen seine Sicherungsstellung nur dann erreicht, wenn sich das Kupplungsglied in der Kupplungsstellung befindet. Somit kann mit der Überwachung des Erreichens der Sicherungsstellung durch den Sicherungsbolzen nicht nur überwacht werden, dass auch das Kupplungsglied seine Kupplungsstellung erreicht, sondern dass es in dieser durch den Sicherungsbolzen ordnungsgemäß gegen ein Verlassen der Kupplungsstellung gesichert ist. Aus diesem Grunde ist der zu überwachende Bolzen bevorzugt der Sicherungsbolzen und ist die zu überwachende Stellung bevorzugt dessen Sicherungsstellung.

Zur Überprüfung, ob der Sicherungsbolzen sich in der Sicherungsstellung befindet, und zwar selbst dann, wenn der Sensor der Anhängekupplung versagt, wurde oben bereits eine selbst bei absoluter Dunkelheit mögliche taktile Überprüfung angesprochen. Hierzu kann das Sensorgehäuse eine Gehäusetastfläche und kann der Sicherungsbolzen eine Bolzentastfläche aufweisen. Bevorzugt ist die Anhängekupplung derart ausgebildet, dass die Tastflächen dann, wenn sich der Sicherungsbolzen in der Sicherungsstellung befindet, im Wesentlichen bündig sind. Sind also das Sensorgehäuse und der Sicherungsbolzen jeweils derart bemessen, dass die genannten Tastflächen beider Bauteile dann, wenn sich der Sicherungsbolzen in seiner Sicherungsstellung befindet, im Wesentlichen eine durchgehende gemeinsame Tastfläche bilden, kann durch Überstreichen der Tastflächen die ordnungsgemäße Lage des Sicherungsbolzens in der Sicherungsstellung erfühlt werden. Dann nämlich fühlt die Bedienperson die beiden bündigen Tatstflächen im Wesentlichen als eine durchgehende Tastfläche, gegebenenfalls unterbrochen durch einen zwischen dem Sensorgehäuse und dem Sicherungsbolzen zur Sicherstellung der Beweglichkeit des Sicherungsbolzens bestehenden Spalt. Steht dagegen die Tastfläche des Sicherungsbolzens gegenüber jener des Sensorgehäuses vor oder liegt dahinter zurück, ist unmittelbar eine Fehlstellung des Sicherungsbolzens taktil erkennbar. Vorzugsweise ist die Anhängekupplung derart ausgebildet, dass die Bolzentastfläche ausgehend von der in der Sicherungsstellung bündigen Lage relativ zur Gehäusetastfläche und dem Sensorgehäuse nur vorstehen kann, da im Falle eines Zurücktretens hinter die Gehäusetastfläche der zwischen Gehäuse und Bolzentastfläche mögliche Freiraum oder Sackraum mit Schmutz aufgefüllt werden könnte, was bei der taktilen Prüfung der korrekten Anordnung des Sicherungsbolzens in der Sicherungsstellung zu einer Fehleinschätzung führen kann. Diese Gefahr ist geringer, wenn die Anhängekupplung strukturell und kinematisch derart ausgestaltet ist, dass die Bolzentastfläche nur bündig mit der Gehäusetastfläche angeordnet sein kann oder relativ zu dieser nach außen, also von einem Kupplungsgehäuse und von dem Sensorgehäuse weg vorsteht.

In diesem Fall bildet die Sicherungsstellung vorteilhaft einen Totpunkt der Sicherungsbolzenbewegung, wobei besonders bevorzugt die Trajektorie des Sicherungsbolzens in die Sicherungsstellung hinein mit jener aus der Sicherungsstellung hinaus identisch ist.

Vorzugsweise ist die Bolzentastfläche an dem Nicht-Erfassungsabschnitt ausgebildet, so dass der Erfassungsabschnitt dann, wenn sich der Sicherungsbolzen in der Sicherungsstellung befindet, durch den Nicht-Erfassungsabschnitt und durch das Sensorgehäuse sowie ein Gehäuse der Anhängekupplung nach außen hin abgeschirmt sein kann. Dies stellt die korrekte Erfassbarkeit der Sicherungsstellung des Sicherungsbolzens für lange Zeit sicher.

Bevorzugt werden Anhängekupplungen, wie sie oben beschrieben sind, an landwirtschaftlichen Fahrzeugen, insbesondere an Traktoren, eingesetzt. Die vorliegende Erfindung betrifft daher auch ein Fahrzeug, insbesondere landwirtschaftliches Fahrzeug, bevorzugt einen Traktor, mit einer Anhängekupplung wie sie oben beschrieben und weitergebildet ist. Bevorzugt ist die Anhängekupplung höhenverstellbar an dem landwirtschaftlichen Fahrzeug vorgesehen.

Ebenso bevorzugt weist das Fahrzeug dann, wenn die Anhängekupplung die oben genannte Drahtlos-Übertragungseinrichtung umfasst, eine Drahtlos-Empfangseinrichtung auf, welche wenigstens dazu ausgebildet ist, Signale von der Drahtlos-Übertragungseinrichtung der Anhängekupplung zu empfangen.

Die vorliegende Erfindung wird nachfolgend anhand der beiliegenden Zeichnungen näher erläutert. Es stellt dar:
- Fig. 1: eine perspektivische Ansicht einer erfindungsgemäßen Ausführungsform einer Anhängekupplung der vorliegenden Erfindung in Form einer Bolzenkupplung, und
- Fig. 2: eine Teilschnittansicht der Anhängekupplung von Fig. 1 in einer eine Längsachse des Sicherungsbolzens enthaltenden und zur Längsachse des Kopplungsbolzens parallelen Schnittebene.

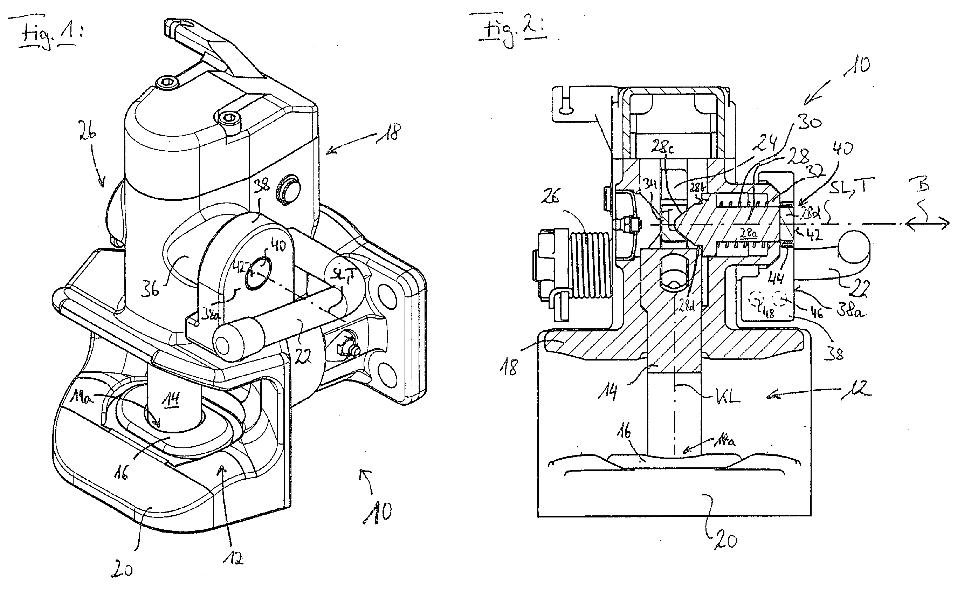

In den Fig. 1 und 2 ist eine erfindungsgemäße Ausführungsform einer Anhängekupplung der vorliegenden Erfindung als Bolzenkupplung allgemein mit 10 bezeichnet. Diese Anhängekupplung umfasst einen Zugösenaufnahmeraum 12, in welchen eine Zugöse eines mit der Anhängekupplung 10 kuppelbaren Fahrzeugs einführbar ist. Die Fig. 1 und 2 zeigen die Anhängekupplung 10 jedoch ohne Zugöse im Zugösen-Aufnahmeraum 12.

Weiter weist die Anhängekupplung einen Kupplungsbolzen 14 auf, welcher in der Kupplungsstellung dargestellt ist, in der er den Zugösen-Aufnahmeraum 12 in der in den Fig. 1 und 2 gezeigten Orientierung in vertikaler Richtung durchsetzt und mit seinem betätigungsfernen Längsende 14a in einer Widerlagerpfanne 16 aufgenommen sein kann.

Die Anhängekupplung 10 weist weiter in der Regel ein Kupplungsgehäuse 18 auf, in welchem der Kupplungsbolzen 14 zwischen seiner aus dem Kupplungsaufnahmeraum 12 zurückgezogenen Freigabestellung und der in den Fig. 1 und 2 dargestellten Kupplungsstellung beweglich aufgenommen sein kann. Das Kupplungsgehäuse 18 kann in seinem den Zugösen-Aufnahmeraum 12 umgebenden Bereich ein Fangmaul 20 aufweisen oder als Fangmaul 20 ausgebildet sein, um ein Einführen einer Zugöse in den Zugösen-Aufnahmeraum dann, wenn sich der Kupplungsbolzen 14 in der zurückgezogenen Freigabestellung befindet, zu erleichtern.

Der Kupplungsbolzen 14 kann in an sich bekannter Weise über einen Betätigungshebel 22, welcher in an sich bekannter Weise mit einem nur in Fig. 2 dargestellten Aufwerfhebel 24 zusammenwirken kann, von der Kupplungsstellung in die Freigabestellung, gegebenenfalls auch in umgekehrter Richtung, bewegbar sein.

Über eine Federanordnung 26 kann der Kupplungsbolzen 14 mittelbar oder unmittelbar zur Bewegung in die Kupplungsstellung vorgespannt sein.

In Fig. 2 ist ein Sicherungsbolzen 28 der Anhängekupplung 10 in Längsschnitt dargestellt. Der Sicherungsbolzen 28 erstreckt sich vorzugsweise rotationssymmetrisch um eine Sicherungsbolzen-Längsachse SL, welche sich im dargestellten Beispiel in der Schnittebene der Anhängekupplung 10 und in der Zeichenebene von Fig. 2 erstreckt.

Im dargestellten Beispiel schließt die Sicherheitsbolzen-Längsachse SL einen rechten Winkel mit der Kupplungsbolzen-Längsachse KL ein. Dies ist zwar nicht zwingend notwendig, jedoch ist ein rechter Winkel zwischen Sicherheitsbolzen-Längsachse SL und Kupplungsbolzen-Längsachse KL bevorzugt, da dann eine Kraftrückwirkung des Kupplungsbolzens 14 auf den Sicherungsbolzen 28, welcher den Sicherungsbolzen 28 aus der in den Fig. 1 und 2 dargestellten Sicherungsstellung heraus bewegen könnte, am wenigsten wahrscheinlich oder gar unmöglich ist. Der Sicherungsbolzen 28 ist vorzugsweise überdies durch eine Feder 30, welche einen Schaftabschnitt 28a bevorzugt umgibt und zwischen einer Gehäusewand 32 und einem Absatz 28b, an welchem der Schaftabschnitt 28a endet, abgestützt ist, in die Sicherungsstellung vorgespannt.

Dann, wenn der Kupplungsbolzen 14 von der in den Fig. 1 und 2 dargestellten Kupplungsstellung in eine Freigabestellung angehoben werden soll, wird zunächst der Sicherungsbolzen 28 über einen Rücksetzvorsprung 34 des Aufwerfhebels 24 längs einer Trajektorie T, welche in dem dargestellten Beispiel mit der Sicherungsbolzen-Längschse SL identisch ist, aus dem Gehäuse 18 der Anhängekupplung 10 herausbewegt. Der Sicherungsbolzen 28 kann also nur in Richtung des Doppelpfeils B bewegbar im Kupplungsgehäuse 18 aufgenommen sein.

Der Rücksetzvorsprung 34 des Aufwerfhebels 24 kann hierzu an einem konischen Längsendabschnitt 28c des Sicherungsbolzens 28 angreifen, so dass eine Vertikalbewegung oder Vertikalschwenkbewegung um eine horizontale Achse des Aufwerfhebels 24 in eine im Wesentlichen horizontale Bewegung längs der Trajektorie T des Sicherungsbolzens 28 umgesetzt werden kann.

Damit der Kupplungsbolzen 14 den Sicherungsbolzen 28 nicht aus seiner Sicherungsstellung zu verdrängen vermag, kann zwischen dem konischen Längsendabschnitt 28c und dem Absatz 28b des Sicherungsbolzens ein zylindrischer Abschnitt 28d vorgesehen sein, welcher in der Sicherungsstellung an einer Oberseite des Kupplungsbolzens 14 anliegt. Aufgrund der bevorzugten Federvorspannung in die Sicherungsstellung kann der Sicherungsbolzen 28 mit dem Absatz 28b seitlich an dem Kupplungsbolzen 14 anliegen, so dass seine Sicherungsstellung längs seiner Bewegungstrajektorie T abgesehen von üblichen Fertigungstoleranzen definiert ist.

An der den Sicherungsbolzen 28 aufnehmenden Gehäuseausbeulung 36 (siehe Fig. 1) kann längsendseitig ein Sensorgehäuse 38 angeordnet sein.

Das Sensorgehäuse 38 kann eine Öffnung 40 aufweisen, durch welche hindurch der Sicherungsbolzen 28 längs seiner Trajektorie T aus der Sicherungsstellung heraus bewegbar ist.

Die nach außen weisende Oberfläche 38a ist vorzugsweise als Gehäusetastfläche 38a und in dieser Eigenschaft bevorzugt als Planfläche ausgebildet.

An den Schaftabschnitt 28a des Sicherungsbolzens 28 kann ein Verlängerungsabschnitt 28d angefügt sein, welcher im Wesentlichen die gleiche Querschnittsgestalt aufweisen kann wie der Schaftabschnitt 28a selbst.

Der Verlängerüngsabschnitt 28b kann eine nach außen weisende Außenfläche 42 aufweisen, welche bevorzugt als Bolzentastfläche 42 ausgebildet ist, und welche daher bevorzugt ebenfalls als Planfläche ausgebildet ist.

Vorzugsweise schließen die beiden Tastflächen 38a und 42 dann, wenn sich der Sicherungsbolzen 28 in der Sicherungsstellung befindet, bündig aneinander an, so dass die beiden Tastflächen 38a und 42 in diesem Fall eine im Wesentlichen einheitliche plane Tastfläche bilden, die von Hand leicht erfühlbar ist. Zwar kann ein Ringspalt zwischen dem Sicherungsbolzen 28 und dem Sensorgehäuse 38 fühlbar sein, jedoch wird eine Bedienperson zweifellos selbst bei absoluter Dunkelheit ertasten können, ob sich die Bolzentastfläche 42 auf gleicher Höhe wie die Gehäusetastfläche 38a befindet oder nicht.

Bauartbedingt kann der Sicherungsbolzen 28 vorzugsweise nicht so tief in das Kupplungsgehäuse 18 eintauchen, dass die Bolzentastfläche 42 gegenüber der Gehäusetastfläche 38a eine Vertiefung bilden würde. Vielmehr ist die Anhängekupplung 10 vorteilhaft derart konstruiert, dass die Bolzentastfläche 42 nur in der Sicherungsstellung des Sicherungsbolzens bündig mit der Gehäusetastfläche 38a ist und in jeder anderen Stellung sich außerhalb des Sensorgehäuses 38 befindet, so dass der Sicherungsbolzen 28 dann gegenüber dem Sensorgehäuse 38 vorsteht.

Die Öffnung 40 des Sensorgehäuses 38 ist vorzugsweise mit einem Feldbauteil 44 umgeben, welches als Induktiv-Feldbauteil eine elektrische Spule mit Wicklungsrichtung um die Trajektorie T sein kann oder welches als kapazitiv-Feldbauteil eine die Trajektorie T umgebende Elektrode sein kann.

Das Feldbauteil 44 kann durch einen Energiespeicher 46 mit Energie versorgt werden.

Vorzugsweise ist der Verlängerungsabschnitt 28d des Sicherungsbolzens 28 längs der Sicherungsbolzen-Längsachse SL derart bemessen, dass er und nur er dann von dem Feldbauteil 44 umgeben ist, wenn sich der Sicherungsbolzen 28 in der Sicherungsstellung befindet. Dies bedeutet mit anderen Worten, dass sich vorzugsweise die Verbindungsfläche zwischen dem Schaftabschnitt 28a und dem Verlängerungsabschnitt 28d in der Sicherungsstellung des Sicherungsbolzens 28 genau dort befindet, wo das dem Schaftabschnitt 28a nähere Längsende des Feldbauteils 44 endet.

Vorzugsweise sind zur leichteren Erfassung der korrekten Stellung des Sicherungsbolzens 28 der Verlängerungsabschnitt 28d und der Schaftabschnitt 28a aus unterschiedlichen Materialien gefertigt, welche in unterschiedlicher Weise mit dem Feldbauteil 44 wechselwirken.

Da der sich innerhalb des Kupplungsgehäuses 18 befindende Abschnitt des Sicherungsbolzens 28 zur effektiven Sicherung des Kupplungsbolzens in der Kupplungsstellung hoher mechanischer Belastung ausgesetzt ist, ist vorzugsweise der Schaftabschnitt 28a mit möglichst widerstandsfähigem Material mit höherer mechanischer Festigkeit gebildet als der Verlängerungsabschnitt 28d.

Vorzugsweise ist der Schaftabschnitt 28a als Erfassungsabschnitt 28a aus Stahl gebildet und zwar im Falle eines Induktiv-Feldbauteils 44 aus einem ferromagnetischen Stahl und im Falle eines Kapazitiv-Feldbauteils 44 aus einem beliebigen Stahl, da es dann nur auf die elektrische Leitfähigkeit des Erfassungsabschnitts 28a ankommt und Stahl stets elektrisch leitfähig ist.

Ebenso kann der Verlängerungsabschnitt 28d als Nicht-Erfassungsabschnitt aus im Wesentlichen nicht-ferromagnetischem und nicht-elektrisch leitendem Kunststoff hergestellt sein. Im Falle eines Induktiv-Feldbauteils 44 kann auch ein nicht-ferromagnetisches Buntmetall oder allgemein ein nicht-ferromagnetisches Material zur Herstellung des Nicht-Erfassungsabschnitts 28d verwendet werden.

In dem hier gezeigten Beispiel durchsetzt also der Sicherungsbolzen 28 stets das Feldbauteil 44, wobei bevorzugt der Erfassungsabschnitt 28a des Sicherungsbolzens 28 dann, wenn sich der Sicherungsbolzen in der Sicherungsstellung befindet, nicht in das Feldbauteil 44 einragt und dann, wenn sich der Sicherungsbolzen nicht in der Sicherungsstellung befindet, abhängig von seiner Momentanstellung unterschiedlich tief in das Feldbauteil 44 einragt oder dieses sogar vollständig durchsetzt.

Dementsprechend ändert sich mit dem Grad des Einragens des Erfassungsabschnitts 28a des Sicherungsbolzens 28 der magnetische Fluss im Inneren eines Induktiv-Feldbauteils und das elektrische Feld radial innerhalb eines Kapazitiv-Feldbauteils. Diese Veränderungen lassen sich durch geeignete Sensoren ermitteln und als Signale zu einer Drahtlos-Übertragungseinrichtung 48 leiten, welche die Signale zu einer Empfangsstation vorzugsweise an dem die Anhängekupplung 10 tragenden Fahrzeug, drahtlos überträgt. Diese Drahtlosübertragung geschieht vorzugsweise durch Funk- bzw. Radiowellen, wenngleich eine optische Übertragung, etwa durch Infrarot, nicht ausgeschlossen sein soll.

Das Feldbauteil 44, die Energiespeicheranordnung 46 und die Drahtlos-Übertragungseinrichtung 48 sind vorzugsweise vollständig in das Sensorgehäuse 38 eingegossen, um die genannten Bauteile möglichst gut vor äußeren Einflüssen zu schützen. Etwaig in dem Sensorgehäuse 38 vorhandene Signalübertragungsleitungen oder Energieübertragungsleitungen können ebenfalls eingegossen sein.

Mit der hier vorgestellten Anhängekupplung lassen sich Informationen über die korrekte Stellung eines Bolzens der Anhängekupplung 10 mit geringem Bauraumaufwand sicher ermitteln. In Weiterbildung der vorliegenden Erfindung können so erhaltene Signale drahtlos zu einer entfernten Empfangsstation, etwa an dem die Anhängekupplung tragenden Fahrzeug, übermittelt und dort weiterverarbeitet werden.

Wie aus den Fig. 1 und 2 unschwer zu erkennen ist, ist die Sensorvorrichtung im Sensorgehäuse 38 aufgrund ihrer eigenen Energieversorgung und der möglichen Funkanbindung autark, so dass sie sowohl als Erstausrüstung wie auch als Nachrüstungsbausatz geeignet ist.

## Patentansprüche

1. Anhängekupplung (10) zur mechanischen Kopplung eines Zugfahrzeugs mit einem Nachlaufteil, etwa ein Nachlauffahrzeug oder ein Nachlaufgerät, wie beispielsweise ein landwirtschaftliches Arbeitsgerät, mit einem Kupplungsglied (14), welches verstellbar ist zwischen einer Freigabestellung und einer Kupplungsstellung, wobei das Kupplungsglied (14) dazu ausgebildet ist, in der Kupplungsstellung ein gesondert vom Kupplungsglied ausgebildetes Gegenkupplungsglied form- oder kraftschlüssig in Eingriff zu halten, und weiter dazu ausgebildet ist, in der Freigabestellung das Gegenkupplungsglied zur Trennung vom Kupplungsglied (14) freizugeben,
wobei die Kupplung wenigstens einen zu überwachenden Bolzen (28) aufweist, welcher zwischen einer vorbestimmten zu überwachenden Stellung und einer davon verschiedenen weiteren Stellung verlagerbar ist,
wobei die Anhängekupplung (10) weiter einen Sensor (38/44) umfasst, welcher wenigstens dazu ausgebildet ist, mittels eines magnetischen oder/und elektrischen Feldes zu erfassen, ob sich der zu überwachende Bolzen (28) in der vorbestimmten zu überwachenden Stellung befindet oder nicht,
**dadurch gekennzeichnet, dass** der Sensor (38/44) ein ein magnetisches oder/und elektrisches Feld erzeugendes Feldbauteil (44) aufweist, welches Feldbauteil (44) derart angeordnet ist, dass es eine Trajektorie (T) des zu überwachenden Bolzens (28) umgibt, welcher dieser bei seiner Bewegung in die zu überwachende Stellung oder/und aus der zu überwachenden Stellung durchläuft.

2. Anhängekupplung (10) nach Anspruch 1,
**dadurch gekennzeichnet, dass** sie als Bolzenkupplung einen Zugösen-Aufnahmeraum (12) zur Aufnahme einer Zugöse als dem Gegenkupplungsglied darin und einen Kupplungsbolzen (14) als das Kupplungsglied umfasst, wobei der Kupplungsbolzen (14) in der Kupplungsstellung weiter in den Zugösen-Aufnahmeraum (12) einragt als in der Freigabestellung, vorzugsweise diesen vollständig durchsetzt.

3. Anhängekupplung nach Anspruch 1,
**dadurch gekennzeichnet, dass** sie als Kugelkupplung eine Kupplungskugel als das Kupplungsglied umfasst, welche zur Aufnahme einer Kupplungspfanne als dem Gegenkupplungsglied ausgebildet ist, wobei die Kupplungskugel vorzugsweise zwischen Kupplungsstellung und Freigabestellung schwenkbar ist.

4. Anhängekupplung nach einem der vorhergehenden Ansprüche,
**dadurch gekennzeichnet, dass** der zu überwachende Bolzen (28) wenigstens während eines Zeitabschnittes seiner Bewegung in die zu überwachende Stellung längs der Trajektorie (T) in das Feldbauteil (44) einragt oder es durchsetzt.

5. Anhängekupplung nach einem der vorhergehenden Ansprüche,
**dadurch gekennzeichnet, dass** das Feldbauteil (44) zur Erzeugung eines magnetischen Feldes ausgebildet ist, etwa eine aus elektrisch leitendem Material gebildete Spule umfasst, und der zu überwachende Bolzen (28) wenigstens in einem Erfassungsabschnitt (28a) ein ferromagnetisches Material umfasst.

6. Anhängekupplung nach einem der vorhergehenden Ansprüche,
**dadurch gekennzeichnet, dass** das Feldbauteil (44) zur Erzeugung eines elektrischen Feldes ausgebildet ist, etwa eine aus elektrisch leitendem Material gebildete, die Trajektorie (T) umgebende Elektrode umfasst, und der zu überwachende Bolzen (28) wenigstens in einem Erfassungsabschnitt (28a) ein elektrisch leitendes Material auf einem vorbestimmten, von einem Betriebspotential des Feldbauteils (44) abweichenden Spannungspotential, vorzugsweise Massepotential eines die Anhängekupplung tragenden Fahrzeugs oder Erdpotential, umfasst.

7. Anhängekupplung nach Anspruch 5 oder 6,
**dadurch gekennzeichnet, dass** der Erfassungsabschnitt (28a) während der Bewegung des zu überwachenden Bolzens (28) in dessen zu überwachende Stellung abhängig von der jeweiligen Momentanstellung unterschiedlich weit in das Feldbauteil (44) einragt.

8. Anhängekupplung nach einem der Ansprüche 5 bis 7,
**dadurch gekennzeichnet, dass** der zu überwachende Bolzen (28) den Erfassungsabschnitt (28a) und einen Nicht-Erfassungsabschnitt (28d) aufweist, welcher mit dem Feldbauteil (44) nicht oder verglichen mit dem Erfassungsabschnitt (28a) in unterschiedlicher Weise wechselwirkt und welcher vorzugsweise längs der Trajektorie (T) dem Erfassungsabschnitt (28) benachbart ist.

9. Anhängekupplung nach Anspruch 8,
**dadurch gekennzeichnet, dass** dann, wenn sich der zu überwachende Bolzen (28) in der zu überwachenden Stellung befindet, der Nicht-Erfassungsabschnitt (28d) vom Feldbauteil (44) umgeben ist.

10. Anhängekupplung nach einem der vorhergehenden Ansprüche,
**dadurch gekennzeichnet, dass** das Feldbauteil (44) in einem lösbar an einem Anhängekupplungsgehäuse (18) angeordneten oder anordenbaren Sensorgehäuse (38) aufgenommen ist.

11. Anhängekupplung nach Anspruch 10,
**dadurch gekennzeichnet, dass** in dem Sensorgehäuse (38) eine Drahtlos-Übertragungseinrichtung (48), insbesondere Funkübertragungseinrichtung, aufgenommen ist.

12. Anhängekupplung nach Anspruch 10 oder 11,
**dadurch gekennzeichnet, dass** in dem Sensorgehäuse (38) eine Energiespeichereinrichtung (46) aufgenommen ist.

13. Anhängekupplung nach einem der Ansprüche 10 bis 12,
**dadurch gekennzeichnet, dass** das Sensorgehäuse (38) eine das Gehäuse (38) durchsetzende Öffnung (40) aufweist, in welche hinein, insbesondere durch welche hindurch, im fertig montierten Zustand die Trajektorie (T) des zu überwachenden Bolzens (28) verläuft.

14. Anhängekupplung nach Anspruch 13,
**dadurch gekennzeichnet, dass** das Feldbauteil (44) die Öffnung (40) umgibt.

15. Anhängekupplung nach einem der vorhergehenden Ansprüche,
**dadurch gekennzeichnet, dass** das Kupplungsglied (14) wenigstens in der Kupplungsstellung durch einen Sicherungsbolzen (28) mechanisch gegen eine Verlagerung aus der Kupplungsstellung sicherbar ist, wobei der Sicherungsbolzen (28) hierzu verlagerbar ist zwischen einer Vorbereitungsstellung, in welcher sich der Sicherungsbolzen (28) dann befindet, wenn sich das Kupplungsglied in einer von der Kupplungsstellung verschiedenen Stellung, vorzugsweise in der Freigabestellung, befindet, und einer Sicherungsstellung, in welcher sich der Sicherungsbolzen (28) zur mechanischen Sicherung des Kupplungsglieds (14) in dessen Kupplungsstellung befindet, wobei der zu überwachende Bolzen (28) der Sicherungsbolzen (28) ist und wobei die zu überwachende Stellung dessen Sicherungsstellung ist.

16. Anhängekupplung nach Anspruch 15 in Verbindung mit einem der Ansprüche 10 bis 14,
**dadurch gekennzeichnet, dass** das Sensorgehäuse (38) eine Gehäusetastfläche (38a) und der Sicherungsbolzen (28) eine Bolzentastfläche (42) aufweisen, welche Tastflächen (38a, 42) dann, wenn sich der Sicherungsbolzen (28) in der Sicherungsstellung befindet, im Wesentlichen bündig sind.

17. Anhängekupplung nach Anspruch 16, unter Einbeziehung wenigstens eines der Ansprüche 8 und 9,
**dadurch gekennzeichnet, dass** die Bolzentastfläche (42) an dem Nicht-Erfassungsabschnitt (28d) ausgebildet ist.

## Claims

1. Towbar (10) for mechanically coupling a towing vehicle to a trailer part, for example a trailer vehicle or a trailer device such as an agricultural working device, comprising a coupling member (14) which can be moved between a release position and a coupling position, the coupling member (14) being designed, when in the coupling position, to engage in an interlocking or force-locked manner with a mating coupling member formed separately from the coupling member, and further being designed, when in the release position, to release the mating coupling member so that it separates from the coupling member (14), the towbar comprising at least one bolt (28) which is to be monitored and can be displaced between a predetermined position to be monitored and an additional, different position, the towbar (10) further comprising a sensor (38/44) which is at least designed to detect, by means of a magnetic and/or electric field, whether or not the bolt (28) to be monitored is in the predetermined position to be monitored, **characterised in that** the sensor (38/44) has a field component (44) generating a magnetic and/or electric field, which field component (44) is arranged such that it surrounds a trajectory (T) of the bolt (28) to be monitored, which bolt moves through said trajectory when moving into the position to be monitored and/or out of the position to be monitored.

2. Towbar (10) according to claim 1, **characterised in that** said towbar comprises a trailer coupling ring receiving space (12) as a bolt coupling for receiving therein a trailer coupling ring as the mating coupling member, and a coupling bolt (14) as the coupling member, the coupling bolt (14) projecting further into the trailer coupling ring receiving space (12) when in the coupling position than when in the release position, and preferably passing through said space completely.

3. Towbar according to claim 1, **characterised in that** said towbar comprises, as the coupling member, a tow ball as a ball-shaped coupling which is designed to receive a coupling ball socket as the mating coupling member, the tow ball preferably being pivotable between the coupling position and the release position.

4. Towbar according to any of the preceding claims, **characterised in that** the bolt (28) to be monitored projects into or passes through the field component (44) along the trajectory (T), at least for a certain time during its movement into the position to be monitored.

5. Towbar according to any of the preceding claims, **characterised in that** the field component (44) is designed to generate a magnetic field, for example comprises a coil formed of electrically conductive material, and the bolt (28) to be monitored comprises a ferromagnetic material at least in a detection portion (28a).

6. Towbar according to any of the preceding claims, **characterised in that** the field component (44) is designed to generate an electric field, for example comprises an electrode which is formed of electrically conductive material and surrounds the trajectory (T), and the bolt (28) to be monitored comprises, at least in a detection portion (28a), an electrically conductive material at a predetermined electric potential which is different from an operating potential of the field component (44), preferably a ground potential of a vehicle carrying the towbar or an earth potential.

7. Towbar according to either claim 5 or claim 6, **characterised in that**, during the movement of the bolt (28) to be monitored into its position to be monitored, the detection portion (28a) projects into the field component (44) by different amounts depending on the respective position at that moment.

8. Towbar according to any of claims 5 to 7, **characterised in that** the bolt (28) to be monitored has the detection portion (28a) and a non-detection portion (28d) which does not interact with the field component (44) or interacts therewith in a different manner from the detection portion (28a) and which is preferably adjacent to the detection portion (28) along the trajectory (T).

9. Towbar according to claim 8, **characterised in that**, when the bolt (28) to be monitored is in the position to be monitored, the non-detection portion (28d) is surrounded by the field component (44).

10. Towbar according to any of the preceding claims, **characterised in that** the field component (44) is received in a sensor housing (38) which is or can be detachably arranged on a towbar housing (18).

11. Towbar according to claim 10, **characterised in that** a wireless transmission means (48), in particular a radio transmission means, is received in the sensor housing (38).

12. Towbar according to either claim 10 or claim 11, **characterised in that** an energy storage means (46) is received in the sensor housing (38).

13. Towbar according to any of claims 10 to 12, **characterised in that** the sensor housing (38) has an opening (40) which passes through the housing (38) and into which, in particular through which, the trajectory (T) of the bolt (28) to be monitored extends in the fully assembled state.

14. Towbar according to claim 13, **characterised in that** the field component (44) surrounds the opening (40).

15. Towbar according to any of the preceding claims, **characterised in that**, at least in the coupling position, the coupling member (14) can be mechanically secured to prevent displacement out of the coupling position by means of a securing bolt (28), the securing bolt (28) being displaceable for this purpose between a standby position, in which the securing bolt (28) is located when the coupling member is in a different position from the coupling position, preferably in the release position, and a securing position, in which the securing bolt (28) is in its coupling position for mechanically securing the coupling member (14), the bolt (28) to be monitored being the securing bolt (28) and the position to be monitored being the securing position thereof.

16. Towbar according to claim 15 in conjunction with any of claims 10 to 14, **characterised in that** the sensor housing (38) has a housing touch surface (38a) and the securing bolt (28) has a bolt touch surface (42), which touch surfaces (38a, 42) are substantially flush with one another when the securing bolt (28) is in the securing position.

17. Towbar according to claim 16, including at least one of claims 8 and 9, **characterised in that** the bolt touch surface (42) is formed on the non-detection portion (28d).

## Revendications

1. Dispositif d'attelage (10) pour l'attelage mécanique d'un véhicule tracteur avec une remorque, par exemple un véhicule tracté ou un appareil tracté, tel que par exemple un outillage agricole, avec un élément d'attelage (14) qui est réglable entre une position de libération et une position d'attelage, l'élément d'attelage (14) étant conçu pour maintenir un élément d'attelage antagoniste formé séparément de l'élément d'attelage en prise par conjugaison de forme ou de force dans la position d'attelage, et étant en outre conçu pour libérer l'élément d'attelage antagoniste dans la position de libération pour le séparer de l'élément d'attelage (14),
l'attelage présentant au moins un goujon à surveiller (28), lequel peut être déplacé entre une position prédéterminée à surveiller et une autre position différente de celle-là,
le dispositif d'attelage (10) comprenant en outre un capteur (38/44), lequel est au moins conçu pour détecter à l'aide d'un champ magnétique et/ou électrique si le goujon à surveiller (28) se trouve ou non dans la position prédéterminée à surveiller,
**caractérisé en ce que** le capteur (38/44) présente un élément de champ (44) générant un champ magnétique et/ou électrique, lequel élément de champ (44) est disposé de telle façon qu'il entoure une trajectoire (T) du goujon à surveiller (28), que celui-ci parcourt lors de son mouvement dans la position à surveiller ou/et hors de la position à surveiller.

2. Dispositif d'attelage (10) suivant la revendication 1,
**caractérisé en ce que**, en tant qu'attelage à goujon, il comprend un logement d'anneau d'attelage (12) pour accueillir un anneau d'attelage comme élément d'attelage antagoniste et un goujon d'attelage (14) comme élément d'attelage, le goujon d'attelage (14) pénétrant plus loin dans le logement d'anneau d'attelage (12) dans la position d'attelage que dans la position de libération et pénétrant de préférence complètement dans celui-ci.

3. Dispositif d'attelage suivant la revendication 1,
**caractérisé en ce que**, en tant qu'attelage à boule, il comprend une boule d'attelage comme élément d'attelage, laquelle est formée pour se loger dans un coussinet d'attelage comme élément d'attelage antagoniste, la boule d'attelage pouvant de préférence pivoter entre la position d'attelage et la position de libération.

4. Dispositif d'attelage suivant l'une des revendications précédentes, **caractérisé en ce que** le goujon à surveiller (28) dépasse au moins pendant une période de temps de son mouvement dans la position à surveiller le long de la trajectoire (T) dans l'élément de champ (44) ou le traverse complètement.

5. Dispositif d'attelage suivant l'une des revendications précédentes, **caractérisé en ce que** l'élément de champ (44) est conçu pour la génération d'un champ magnétique, comprend une bobine formée dans un matériau électriquement conducteur, et le goujon à surveiller (28) comprend au moins un matériau ferromagnétique dans une section de détection (28a).

6. Dispositif d'attelage suivant l'une des revendications précédentes, **caractérisé en ce que** l'élément de champ (44) est conçu pour la génération d'un champ électrique, comprend une électrode formée dans un matériau électriquement conducteur, entourant la trajectoire (T), et le goujon à surveiller (28) comprend, au moins dans une section de détection (28a), un matériau électriquement conducteur à un potentiel prédéterminé, différent d'un potentiel de tension de fonctionnement de l'élément de champ (44), de préférence un potentiel de masse d'un véhicule portant le dispositif d'attelage ou un potentiel de terre.

7. Dispositif d'attelage suivant la revendication 5 ou 6,
**caractérisé en ce que** la section de détection (28a) pénètre plus ou moins loin dans l'élément de champ (44) en fonction de la position momentanée respective pendant le mouvement du goujon à surveiller (28) dans sa position à surveiller.

8. Dispositif d'attelage suivant l'une des revendications 5 à 7,
**caractérisé en ce que** le goujon à surveiller (28) présente la section de détection (28a) et une section de non-détection (28d), laquelle n'interagit pas avec l'élément de champ (44) ou de manière différente en comparaison avec la section de détection (28a) et laquelle est de préférence voisine de la section de détection (28) le long de la trajectoire (T).

9. Dispositif d'attelage suivant la revendication 8,
**caractérisé en ce que**, lorsque le goujon à surveiller (28) se trouve dans la position à surveiller, la section de non-détection (28d) est entourée par l'élément de champ (44).

10. Dispositif d'attelage suivant l'une des revendications précédentes, **caractérisé en ce que** l'élément de champ (44) est logé dans un boîtier de capteur (38) disposé ou pouvant être disposé de manière amovible à un carter de dispositif d'attelage (18).

11. Dispositif d'attelage suivant la revendication 10,
**caractérisé en ce qu'**un dispositif de transmission sans fil (48), en particulier un dispositif de transmission par radiofréquence, est logé dans le boîtier de capteur (38).

12. Dispositif d'attelage suivant la revendication 10 ou 11,
**caractérisé en ce qu'**un dispositif de stockage d'énergie (46) est logé dans le boîtier de capteur (38).

13. Dispositif d'attelage suivant l'une des revendications 10 à 12,
**caractérisé en ce que** le boîtier de capteur (38) présente une ouverture (40) traversant le boîtier (38), dans laquelle, en particulier à travers laquelle, s'étend la trajectoire (T) du goujon à surveiller (28) dans l'état de montage terminé.

14. Dispositif d'attelage suivant la revendication 13,
**caractérisé en ce que** l'élément de champ (44) entoure l'ouverture (40).

15. Dispositif d'attelage suivant l'une des revendications précédentes, **caractérisé en ce que** l'élément d'attelage (14) peut au moins dans la position d'attelage être sécurisé mécaniquement par un goujon de sécurité (28) contre un déplacement hors de la position d'attelage, le goujon de sécurité (28) pouvant à cet effet être déplacé entre une position de préparation, dans laquelle le goujon de sécurité (28) se trouve lorsque l'élément d'attelage se trouve dans une position différente de la position d'attelage, de préférence dans la position de libération, et une position de sécurité, dans laquelle le goujon de sécurité (28) se trouve pour la sécurisation mécanique de l'élément d'attelage (14) dans la position d'attelage de celui-ci, le goujon à surveiller (28) étant le goujon de sécurité (28) et la position à surveiller étant sa position de sécurisation.

16. Dispositif d'attelage suivant la revendication 15 en combinaison avec une des revendications 10 à 14,
**caractérisé en ce que** le boîtier de capteur (38) présente une surface tactile de boîtier (38a) et le goujon de sécurité (28) une surface tactile de goujon (42), lesquelles surfaces tactiles (38a, 42) sont essentiellement à fleur lorsque le goujon de sécurité (28) se trouve dans la position de sécurisation.

17. Dispositif d'attelage suivant la revendication 16, avec prise en compte d'une des revendications 8 ou 9,
**caractérisé en ce que** la surface tactile de goujon (42) est formée sur la section de non-détection (28d).
